# NEUE EUROPÄISCHE PATENTSCHRIFT

(11) **EP 1 034 978 B2**
(45) Veröffentlichungstag und Bekanntmachung des Hinweises auf die Entscheidung über den Einspruch: **27.08.2008**
(45) Hinweis auf die Patenterteilung: 26.01.2005
(21) Anmeldenummer: 00104313.2
(22) Anmeldetag: 02.03.2000
(51) Int. Cl.: B60R 5/00

(54) **Einrichtung zur Befestigung eines Fahrrades innerhalb eines Kraftfahrzeuges**
Fixing device for a bicycle inside a vehicle
Dispositif de fixation d'une bicyclette à l'intérieur d'un véhicule

(30) Priorität: 05.03.1999 DE 19909603; 05.03.1999 DE 19909606
(43) Veröffentlichungstag der Anmeldung: 13.09.2000
(73) Patentinhaber: Adam Opel GmbH, 65423 Rüsselsheim (DE)
(72) Erfinder: Hürter, Helmut, Dipl.-Ing. (FH), 64572 Büttelborn (DE); Getrost, Gerhard, Dipl.-Ing., 64521 Gross-Gerau (DE)
(74) Vertreter: Quermann, Helmut

(56) Entgegenhaltungen:
- DE-A- 4 222 024
- DE-A- 4 226 945
- DE-A- 4 442 027
- DE-A- 19 544 267
- DE-A- 19 546 543
- DE-A- 19 612 232
- DE-A- 19 636 977
- DE-B- 19 751 897
- DE-U- 9 412 752
- DE-U- 29 613 480
- DE-U- 29 613 572
- DE-U- 29 614 632
- FR-A- 2 734 528
- US-A- 4 792 183

## Beschreibung

Die Erfindung betrifft eine Einrichtung zur Befestigung eines Fahrrades an einer Sitzlehne eines Kraftfahrzeuges, mit einem an der Sitzlehne zu befestigenden Halteteil und mit einem auf dem Halteteil angeordneten, zur Befestigung des Fahrrades vorgesehenen Halteelement.

Eine solche Einrichtung ist beispielsweise aus der DE 42 08 064 C2 bekannt. Diese Einrichtung hat eine zur Befestigung an der Rücksitzlehne vorgesehene Flanschplatte. Die Flanschplatte weist zur Durchführung von Befestigungsmitteln vorgesehene Bohrungen auf. Die Befestigungsmittel dienen zur Verschraubung der Flanschplatte mit einem Sitzrücken der Rücksitzlehne. Nachteilig bei dieser Einrichtung ist, dass sich die Befestigung der Flanschplatte an dem Sitzrücken sehr aufwendig gestaltet. Hierfür ist der Sitzrücken entsprechend der Bohrungen der Flanschplatte anzubohren. Häufig soll die Einrichtung bei Nichtgebrauch regelmäßig demontiert werden. Deshalb werden in dem Sitzrücken Nietmuttern gesetzt, mit denen die Flanschplatte verschraubt werden kann. Beim Anbohren des Sitzrückens besteht zudem die Gefahr, dass eine Polsterung der Rücksitzlehne und ein Bezug beschädigt werden.

Durch die DE 296 14 632 U1 ist eine Einrichtung bekannt geworden, welche zur Befestigung an im Kraftfahrzeugboden angeordneten Gepäcksicherungsösen oder Halterungen für Sicherheitsgurte vorgesehen ist. Dies erfordert jedoch vor der Montage der Einrichtung eine Entfernung von Sitzen aus dem Kraftfahrzeug. Bei der Befestigung der Einrichtung an Halterungen für Sicherheitsgurte ist zudem nach der Wiedereinsetzung der Sitze eine zuverlässige Befestigung der Sicherheitsgurte nur sehr schwer sicherzustellen.

Durch die DE 42 26 945 C2 und die DE 196 36 977 A1 sind jeweils Halterungen für den Transport von Fahrrädern im Fahrzeuginnern bekannt. Diese haben eine Halteeinrichtung für eine Achsaufnahme der Vorderradgabel des Fahrrades. Diese Halteeinrichtungen weisen jeweils eine Flanschplatte zur Verschraubung mit dem Sitzrücken oder mit dem Fahrzeugboden auf.

Der Erfindung liegt das Problem zugrunde, eine Einrichtung der eingangs genannten Art so zu gestalten, dass sie besonders einfach in Kraftfahrzeugen montierbar und demontierbar ist.

Dieses Problem wird erfindungsgemäß dadurch gelöst, dass das Halteteil zur Befestigung an einer Kopfstützenhalterung der Sitzlehne ausgestaltet ist.

Durch diese Ausgestaltung benötigt das Halteteil keine mit dem Sitzrücken zu verschraubende Flanschplatte. Ein Anbohren des Sitzrückens ist dank der Erfindung nicht erforderlich. Hierdurch wird eine Beschädigung des Polsters des Sitzes zuverlässig vermieden. Die Einrichtung ist daher besonders einfach in Kraftfahrzeugen montierbar und demontierbar. Da das Halteteil an ohnehin besonders stabil gestalteten Bereichen des Sitzes befestigt wird, kann das Halteteil im montierten Zustand besonders hohe Haltekräfte aufnehmen. Das Halteteil kann zudem bei entsprechender Gestaltung zur Befestigung in einer vertikalen oder horizontalen Stellung der Sitzlehne vorgesehen sein.

Zur weiteren Vereinfachung der Montage des Halteteils an dem Sitzrücken trägt es gemäß einer vorteilhaften Weiterbildung der Erfindung bei, wenn das Halteteil zur Befestigung an die die Kopfstützen mit der Sitzlehne verbindenden Haltestangen oder in die die Haltestangen führenden Kopfstützenhülsen der Sitzlehne Haltemittel aufweist und Mittel zu seiner Abstützung an einem rückseitigen Bereich der Sitzlehne aufweist. Durch diese Gestaltung lässt sich das Halteteil an besonders leicht zugänglichen Bauteilen des Sitzes befestigen.

In der Regel haben die Haltestangen der Kopfstützen eine Rasterung, in die Rastmittel der Kopfstützenhülse eingreifen. Zur Verstellung und Demontage der Kopfstütze ist eine Entriegelungstaste an der Kopfstützenhülse vorgesehen. Beim Betätigen der Entriegelungstaste werden die Rastmittel aus der Rasterung der Haltestange entfernt. Hierbei gestaltet sich die Montage und die Demontage der erfindungsgemäßen Einrichtung besonders einfach, wenn die Haltemittel eine in eine Kopfstützenhülse der Sitzlehne für die Haltestangen der Kopfstützen einrastende Raststange haben. Zur Montage der erfindungsgemäßen Einrichtung lässt sich die Entriegelungstaste betätigen und die Kopfstütze einfach gegen die Haltemittel austauschen.

Das Halteteil ist gemäß einer vorteilhaften Weiterbildung der Erfindung zuverlässig in seiner vorgesehenen Lage gehalten, wenn die Haltemittel eine Lasche mit einer entsprechend den Abmessungen der Haltestangen der Kopfstütze gestalteten Bohrung aufweisen. Zur Montage der erfindungsgemäßen Einrichtung wird die Lasche einfach zwischen der Sitzlehne und der Kopfstütze eingespannt.

Die Haltemittel gestalten sich gemäß einer anderen vorteilhaften Weiterbildung der Erfindung konstruktiv besonders einfach, wenn die Haltemittel eine zur seitlichen Umgreifung der Haltestange vorgesehene gabelförmige Klaue haben. Die Klaue kann dabei in die Rasterung der Haltestange für die Kopfstütze eingreifen.

Die erfindungsgemäße Einrichtung lässt sich einfach an Sitzlehnen mit nicht demontierbaren Kopfstützen befestigen, wenn zwei Klauen zur Umgreifung jeweils einer Haltestange aufeinander zu- oder voneinander wegweisend angeordnet sind.

Die erfindungsgemäße Einrichtung lässt sich mit besonders geringem Aufwand für beliebige Kraftfahrzeuge umrüsten, wenn die Haltemittel eine Abwinklung aufweisen und als separates Bauteil an dem Halteteil befestigt sind. Hierdurch kann das Halteteil als Standardbauteil für alle Kraftfahrzeuge gestaltet sein, während zur Anpassung an die unterschiedlichen Abmessungen der Sitzlehnen die Haltemittel ausgewechselt werden.

Eine Anpassung der erfindungsgemäßen Einrichtung an unterschiedliche Abmessungen von Kopfstützen gestaltet sich besonders einfach, wenn die Haltemittel jeweils paarweise an dem Halteteil angeordnet sind und der Abstand der Haltemittel zueinander verstellbar ist.

Bei den bekannten Einrichtungen müssen für jedes mitzuführende Fahrrad eine eigene Flanschplatte an dem Sitzrücken festgeschraubt werden. Dabei sind die Positionen der Fahrräder von den in dem Sitzrücken angeordneten Bohrungen dauerhaft festgelegt. Das Fahrrad oder mehrere Fahrräder lassen sich jedoch gemäß einer anderen vorteilhaften Weiterbildung der Erfindung wahlweise komfortabel in einem mittleren Bereich oder platzsparend in einem seitlichen Bereich des Kraftfahrzeuges anordnen, wenn das Halteteil eine quer zur Fahrtrichtung des Kraftfahrzeuges montierbare Führungsschiene zur verschiebbaren Halterung zumindest eines Halteelements aufweist.

Die Befestigung des Halteteils an der Haltestange gestaltet sich gemäß einer anderen vorteilhaften Weiterbildung der Erfindung besonders kostengünstig, wenn die Haltemittel einen Splint zur Befestigung des Halteteils an der Haltestange haben. Dieser Splint kann dabei selbstverständlich in der Rasterung der Haltestange einrasten.

Die Montage der erfindungsgemäßen Einrichtung gestaltet sich besonders komfortabel, wenn die Haltemittel eine Schenkelfeder mit einem in Rasterungen der Haltestange eindringenden Schenkel haben.

Das Halteteil lässt sich gemäß einer anderen vorteilhaften Weiterbildung zuverlässig mit der Sitzlehne verspannen, wenn es einen von einer Stellschraube verstellbaren, zur Vorspannung gegen die Rückseite der Sitzlehne vorgesehenen Teller aufweist.

Zur weiteren Vereinfachung der Montage des Halteteils an der Sitzlehne trägt es gemäß einer anderen vorteilhaften Weiterbildung der Erfindung bei, wenn das Halteteil einen von einem Spannhebel verstellbaren Exzenter zu seiner Vorspannung gegen die Rückseite der Sitzlehne hat.

Bei einem eine umlegbare und verriegelbare Sitzlehne aufweisenden Kraftfahrzeug, bei dem die Sitzlehne seitlich Verriegelungen zur Verbindung mit Schließteilen der Karosserie des Kraftfahrzeuges aufweist, vermag die erfindungsgemäße Einrichtung besonders hohe Haltekräfte aufzunehmen, wenn das Halteteil zumindest ein mit einer der Verriegelungen der Sitzlehne korrespondierendes Schließteil hat. Durch diese Gestaltung sind an der Sitzlehne keine Anpassungen an das Halteteil erforderlich, da die Verriegelungen im umgelegten Zustand der Sitzlehne ohnehin frei zugänglich sind. Meist ist jede der Verriegelungen als von einem Hebel betätigbare Gabelfalle gestaltet. In diesem Fall kann das Schließteil einfach als von der Gabelfalle umgreifbarer Riegel oder Bügel gestaltet sein.

Das Halteteil ist gemäß einer vorteilhaften Weiterbildung der Erfindung zuverlässig an der Sitzlehne befestigt, wenn sich das Halteteil über die gesamte Breite der Sitzlehne erstreckt und an seinen Enden jeweils ein Schließteil hat. Hierdurch bietet die erfindungsgemäße Einrichtung für mehrere Fahrräder auch bei Kurvenfahrten des Kraftfahrzeuges eine zuverlässige seitliche Führung.

Eine vorgesehene Position der Führungsschiene in Abhängigkeit von der Position der Verriegelungen der Sitzlehne lässt sich gemäß einer vorteilhaften Weiterbildung der Erfindung einfach festlegen, wenn zumindest eines der Enden der Führungsschiene in einem Seitenteil befestigt ist und wenn das Schließteil des Halteteils an dem Seitenteil angeordnet ist. Die Position der Führungsschiene gegenüber den Verriegelungen und damit die Position des zu transportierenden Fahrrades in dem Kraftfahrzeug wird dank der Erfindung durch die Abmessungen des Seitenteils festgelegt.

Die Handhabung der erfindungsgemäßen Einrichtung gestaltet sich besonders komfortabel, wenn das Halteelement auf der Führungsschiene feststellbar gestaltet ist. Das Fahrrad lässt sich hierdurch zunächst im mittleren Bereich des Kraftfahrzeuges an den Halteelementen befestigen und anschließend in eine platzsparende seitliche Stellung schieben.

Die erfindungsgemäße Einrichtung gestaltet sich konstruktiv besonders einfach, wenn das Halteelement an einem Hintersitzrücken der Sitzlehne abstützend gestaltet ist.

Ein seitliches Herausziehen des Schließteils aus der Verriegelung lässt sich gemäß einer anderen vorteilhaften Weiterbildung der Erfindung einfach vermeiden, wenn das Schließteil des Halteteils pilzförmig gestaltet ist. Selbstverständlich kann das Schließteil zur Vereinfachung seiner Ausrichtung gegenüber der Verriegelung verstellbar sein.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine erfindungsgemäße Einrichtung mit einem Laschen aufweisenden Haltemittel für Haltestangen einer Kopfstütze,
- Fig. 2: eine weitere Ausführungsform der erfindungsgemäßen Einrichtung mit in Kopfstützenhülsen einrastenden Raststangen,
- Fig. 3: eine weitere Ausführungsform der erfindungsgemäßen Einrichtung mit einem in eine Verriegelung eindringenden Schließteil,
- Fig. 4: eine Schnittdarstellung durch Haltestangen von mehreren Kopfstützen mit einer weiteren Ausführungsform der erfindungsgemäßen Einrichtung,
- Fig. 5: einen verstellbaren Teller zur Abstützung der erfindungsgemäßen Einrichtung an einem Sitzrücken,
- Fig. 6: einen Exzenter zur Abstützung der erfindungsgemäßen Einrichtung an dem Sitzrücken,
- Fig. 7: einen Splint zur Sicherung der erfindungsgemäßen Einrichtung an der Haltestange der Kopfstütze,
- Fig. 8: eine Schenkelfeder zur Sicherung der erfindungsgemäßen Einrichtung an der Haltestange.
- Fig. 9: eine weitere Ausführungsform der erfindungsgemäßen Einrichtung.

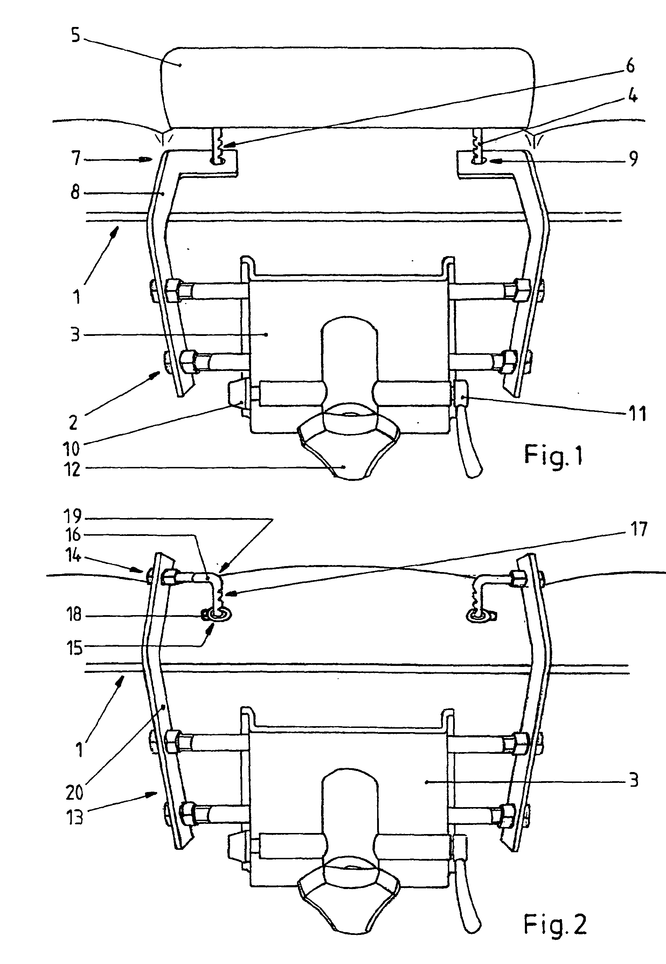

Figur 1 zeigt eine an einer Sitzlehne 1 montierte Einrichtung mit einem Halteteil 2 und mit einem Halteelement 3 zur Halterung eines nicht dargestellten Fahrrades. Die Sitzlehne 1 hat eine auf Haltestangen 4 angeordnete Kopfstütze 5. Die Kopfstütze 5 lässt sich in der Höhe gegenüber der Sitzlehne 1 verstellen und von ihr trennen. Die Haltestangen 4 sind jeweils mit Rasterungen 6 versehen. An dem Halteteil 2 ist ein Haltemittel 7 mit zu den Haltestangen 4 abgewinkelten Laschen 8 angeordnet. Die Laschen 8 weisen Bohrungen 9 zur Durchführung der Haltestangen 4 auf. Zur Montage des Halteteils 2 wird die Kopfstütze 5 von der Sitzlehne 1 getrennt und die Haltestangen 4 durch die Bohrungen 9 der Laschen 8 geführt. Anschließend lässt sich die Kopfstütze 5 wieder an der Sitzlehne 1 montieren. Um eine Bewegung des Halteteils 2 zu verhindern, können die Laschen 8 zwischen der Kopfstütze 5 und der Sitzlehne 1 eingespannt werden. Das Halteelement 3 hat einen Gabelaufnahmebolzen 10 für eine Vorderradgabel des Fahrrades. An dem Gabelaufnahmebolzen 10 ist zudem ein Schnellspannverschluss 11 angeordnet, mit dem sich das Fahrrad einfach montieren lässt. Durch diese Gestaltung des Halteelements 3 ist die Sitzlehne 1 vor der Befestigung des Fahrrades in die horizontale Position zu schwenken. Weiterhin hat das Halteelement 3 eine Stellschraube 12, mit der sich sein Abstand gegenüber der Sitzlehne 1 einstellen lässt. Das Halteteil 3 stützt sich damit an der Rückseite der Sitzlehne ab. Die Laschen 8 sind mit dem Halteelement 3 verschraubt, so dass sie sich entsprechend den Abmessungen und der Anordnung der Haltestangen 4 der Kopfstützen 5 einfach gestalten und austauschen lassen.

Figur 2 zeigt eine weitere Ausführungsform der Einrichtung, bei der ein Halteteil 13 Haltemittel 14 mit in Kopfstützenhülsen 15 der Sitzlehne 1 eindringende Raststangen 16 hat. Die Kopfstützenhülsen 15 sind nach der Demontage der in Figur 1 dargestellten Kopfstütze 5 zugänglich. Die Raststangen 16 sind wie die in Figur 1 dargestellten Haltestangen 4 der Kopfstütze 5 gestaltet und weisen eine Rasterung 17 auf. In die Rasterungen 17 greifen innerhalb der Kopfstützenhülsen 15 angeordnete, von Entriegelungstasten 18 betätigbare Rastmittel ein. Zur Vereinfachung der Zeichnung sind die Rastmittel nicht dargestellt. Das Halteteil 13 lässt sich damit nach einem Betätigen der Entriegelungstasten 18 von der Sitzlehne 1 entfernen. Weiterhin haben die Raststangen 16 jeweils eine Abwinklung 19, mit der sie mit Seitenteilen 20 verschraubt ist. Alternativ dazu können die Raststangen 16 auch mit den Seitenteilen 20 verschweißt sein, so dass sie über das Halteelement 3 eingeleitete Biegekräfte aufnehmen können. Das Halteteil13 stützt sich an der Rückseite der Sitzlehne ab.

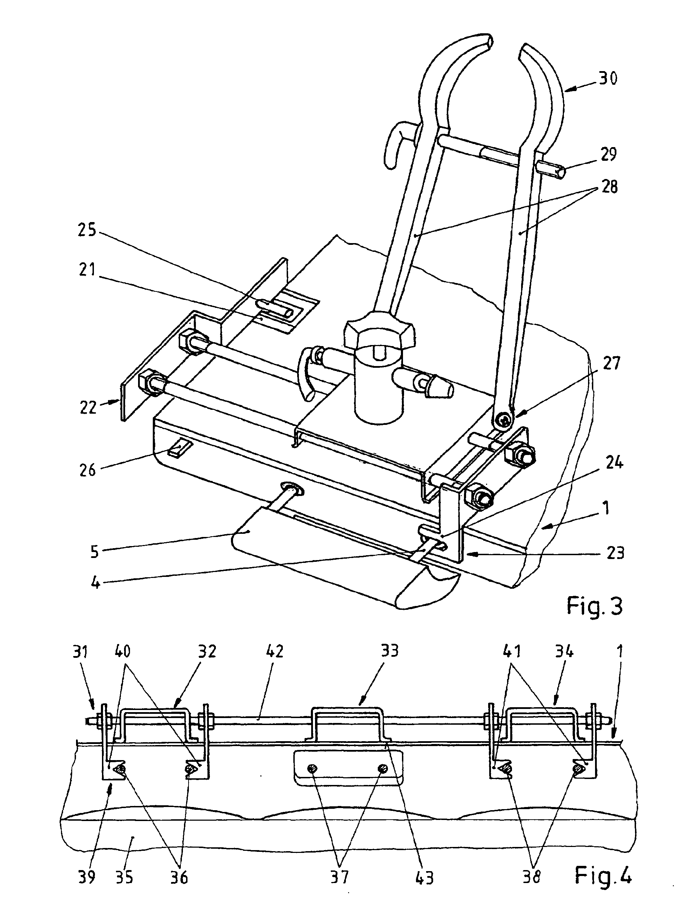

Figur 3 zeigt eine an der in eine horizontale Stellung geschwenkten Sitzlehne 1 montierte weitere Ausführungsform der Einrichtung. Die Einrichtung hat ein sich an einer der Haltestangen 4 der Kopfstütze 5 und in einer Verriegelung 21 der Sitzlehne abstützendes Halteteil 22. Das Halteteil 22 weist Haltemittel 23 mit einer die Haltestange 4 seitlich umgreifenden und gabelförmig gestalteten Klaue 24 auf. Weiterhin hat das Halteteil 22 ein mit der Verriegelung 21 korrespondierendes Schließteil 25. Die Verriegelung 21 dient dazu, die Sitzlehne 1 in einer vertikalen Stellung mit einem nicht dargestellten Schließteil der Karosserie des Kraftfahrzeuges zu verbinden. In der eingezeichneten horizontalen Stellung der Sitzlehne 1 ist die Verriegelung 21 frei zugänglich. Auf der Sitzlehne 1 ist ein Betätigungselement 26 zum Öffnen der Verriegelung 21 angeordnet. Das Halteteil 22 trägt ein Halteelement 27 mit Stützstangen 28 zur Halterung eines Rahmenrohres des Fahrrades. Die Stützstangen 28 haben an ihren freien Enden eine von einer Spannschraube 29 verstellbare Klemmfaust 30.

Figur 4 zeigt eine weitere an der Sitzlehne 1 befestige Ausführungsform der Einrichtung mit mehreren auf einem Halteteil 31 angeordneten Halteelementen 32 - 34 für jeweils ein Fahrrad. Die Sitzlehne 1 ist hier Teil einer Rücksitzbank und in eine horizontale Lage auf ein Sitzpolster 35 geschwenkt. An der Sitzlehne 1 sind drei Paare Haltestangen 36 - 38 für jeweils eine Kopfstütze dargestellt. Zur Vereinfachung der Zeichnung sind die Kopfstützen in der Zeichnung nicht dargestellt. Das Halteteil 31 hat Haltemittel 39 mit paarweise einander gegenüberstehenden Klauen 40, 41. Die Klauen 40, 41 sind gegen die beiden äußeren Paare der Haltestangen 36, 38 vorgespannt. Das Halteteil 31 hat eine sich über die gesamte Breite der Sitzlehne 1 erstreckende Führungsschiene 42 zur verschieblichen und feststellbaren Halterung der Halteelemente 36 - 38. Die Halteelemente 36 - 38 haben zum Abstützen an der Rückseite der Sitzlehne 1 jeweils Stützfüße 43.

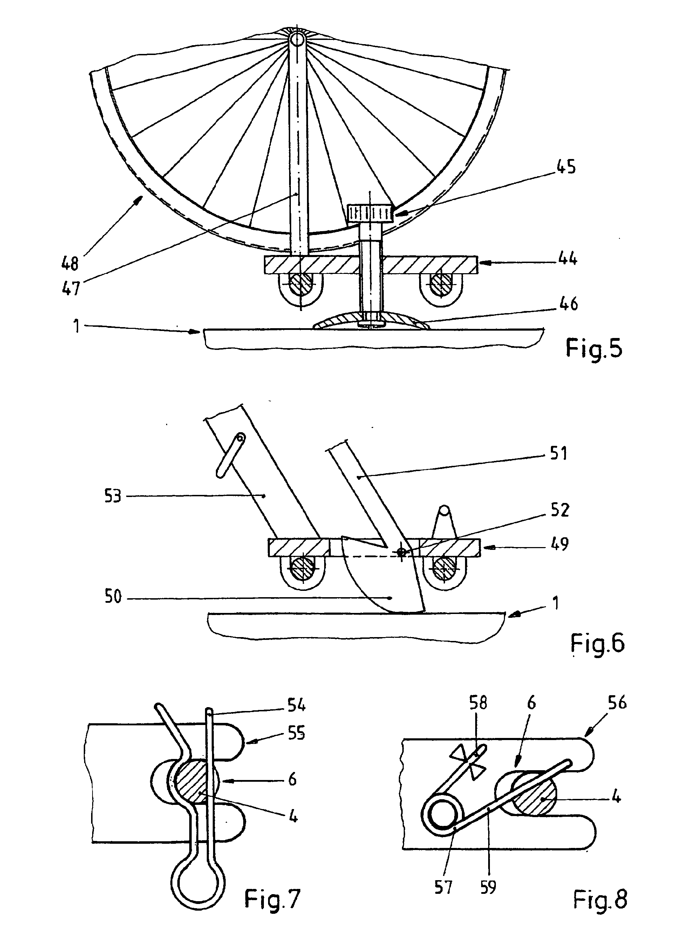

Figur 5 zeigt eine an einem Halteelement 44 angeordnete Stellschraube 45 zum Verstellen eines das Halteelement 44 an der Rückseite der Sitzlehne 1 abstützenden Tellers 46. Das Halteelement 44 trägt an seiner Oberseite beispielhaft einen Haltearm 47 für ein Vorderrad des Fahrrades. Das Halteelement 44 kann beispielsweise an dem in Figur 3 dargestellten Halteteil 22 befestigt werden. Hierbei lässt sich durch die Verstellung das Schließteil 25 des Halteteils 22 in der Verriegelung 21 vorspannen. Bei einem Einsatz des Halteelements 44 an den in den Figuren 1 und 2 dargestellten Halteteilen 2, 13 kann diese Abstützung deren Montage an der Sitzlehne 1 vereinfachen und Bewegungen der Haltemittel 7, 14 gegenüber den Haltestangen 4 oder den Kopfstützenhülsen 15 vermeiden.

Figur 6 zeigt ein Halteelement 49 mit einem drehfest mit einem Exzenter 50 verbundenen Spannhebel 51. Der Spannhebel 51 hat ein Lager 52 in dem Halteelement 49. Bei einer Bewegung des Spannhebels 51 wird der Exzenter 50 gegen die Rückseite der Sitzlehne vorgespannt. An seiner Oberseite weist das Halteelement 49 Halterungen 53 für das Fahrrad auf. Das Halteelement 49 lässt sich damit wie das aus Figur 5 dargestellte Halteelement 44 einsetzen.

Figur 7 zeigt einen Splint 54 zur Sicherung eines als Klaue ausgebildeten Haltemittels 55 an der Haltestange 4. Der Splint 54 greift in eine Rasterung 6 der Haltestange 4 ein, so dass das Haltemittel 55 gegen eine Bewegung entlang der Haltestange 4 gesichert ist. Anstelle des als Klaue ausgebildeten Haltemittels 55 können auch die in Figur 1 dargestellten Laschen 8 mit dem Splint 54 gesichert werden. Zur Demontage lässt sich der Splint 54 einfach von der Haltestange 4 abziehen.

Figur 8 zeigt eine Sicherung eines als Klaue ausgebildeten Haltemittels 56 mittels einer Schenkelfeder 57. Die Schenkelfeder 57 ist mit einem Schenkel 58 mit dem Haltemittel 56 verbunden. Mit einem zweiten Schenkel 59 rastet die Schenkelfeder 57 in der Rasterung 6 der Haltestange 4 ein.

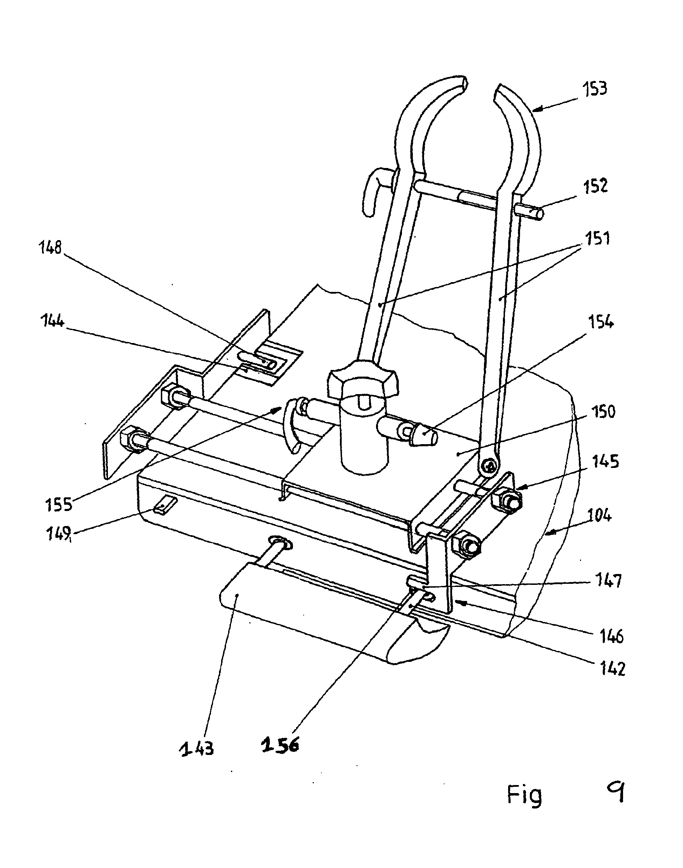

Figur 9 zeigt perspektivisch eine an der in eine horizontale Stellung geschwenkten Sitzlehne 104 montierte weitere Ausführungsform der Einrichtung. Die Einrichtung hat ein sich an einer Haltestange 142 einer Kopfstütze 143 und in einer Verriegelung 144 der Sitzlehne abstützendes Halteteil 145. Die Haltestange 142 ist in einer Kopfstützenhülse 156 der Sitzlehne 104 verschieblich geführt. Das Halteteil 145 weist Haltemittel 146 mit einer die Haltestange 142 seitlich umgreifenden Klaue 147 auf. Weiterhin hat das Halteteil 145 ein mit der Verriegelung 144 korrespondierendes Schließteil 148. Diese Verriegelung 144 dient dazu, die Sitzlehne 104 in einer vertikalen Stellung mit einem Schließteil der Karosserie des Kraftfahrzeuges zu verbinden. Auf der Sitzlehne 104 ist ein Betätigungselement 149 zum Öffnen der Verriegelung 144 angeordnet. Anstelle der Klaue 147 könnte das Halteteil 145 eine nicht dargestellte Raststange aufweisen, mit der es nach einer Demontage der Kopfstütze 143 anstelle der Haltestange 142 in die Kopfstützenhülse 156 eingeführt werden könnte. Das Halteteil 145 trägt ein Halteelement 150 mit Stützstangen 151 zur Halterung eines Rahmenrohres des Fahrrades. Die Stützstangen 151 haben an ihren freien Enden eine von einer Spannschraube 152 verstellbare Klemmfaust 153. Ein auf dem Halteelement 150 angeordneter Gabelaufnahmebolzen 154 hat einen Schnellspannverschluss 155.

## Patentansprüche

1. Einrichtung zur Befestigung eines Fahrrades an einer Sitzlehne eines Kraftfahrzeuges, mit einem an der Sitzlehne zu befestigenden Halteteil und mit einem auf dem Halteteil angeordneten, zur Befestigung des Fahrrades vorgesehenen Halteelement, **dadurch gekennzeichnet, dass** das Halteteil (2, 13, 22, 31, 145) zur Befestigung an einer Kopfstützenhalterung der Sitzlehne (1, 104) ausgestaltet ist.

2. Einrichtung nach Anspruch 1, **dadurch gekennzeichnet, dass** das Halteteil (22, 145) zur Befestigung an einer zur Verbindung mit einem Schließteil (25, 114, 115) der Karosserie des Kraftfahrzeuges vorgesehenen Verriegelung (116, 117, 144) der Sitzlehne (1, 104) ausgestaltet ist.

3. Einrichtung nach Anspruch 1 oder 2, **dadurch gekennzeichnet, dass** das Haltetell (2, 13, 22, 31, 145) zur Befestigung an die die Kopfstützen (5, 143) mit der Sitzlehne (1) verbindenden Haltestangen (4, 36 - 38, 142) oder in die die Haltestangen (4, 36 - 38) führenden Kopfstützenhülsen (15, 156) der Sitzlehne (1) Haltemittel (7, 14, 23, 39) aufweist und Mittel zu seiner Abstützung an einem rückseitigen Bereich der Sitzlehne (1) aufweist.

4. Einrichtung nach Anspruch 3, **dadurch gekennzeichnet, dass** die Haltemittel (14) eine in eine Kopfatützenhülse (15) der Sitzlehne (1) für die Haltestangen (4) der Kopfstützen (5) einrastende Raststange (16) haben.

5. Einrichtung nach Ansprüche 3 oder 4, **dadurch gekennzeichnet, dass** die Haltemittel (7) eine Lasche (8) mit einer entsprechend den Abmessungen der Haltestangen (4) der Kopfstütze (5) gestalteten Bohrung (9) aufweisen.

6. Einrichtung nach einem der vorhergehenden Ansprüche 3-5, **dadurch gekennzeichnet, dass** die Haltemittel (23, 39, 146) eine zur seitlichen Umgreifung der Haltestange (4, 36, 38, 142) vorgesehene gabelförmige Klaue (24, 40, 41, 147) haben.

7. Einrichtung nach Anspruch 6, **dadurch gekennzeichnet, dass** zwei Klauen (40, 41) zur Umgreifung jeweils einer Haltestange (36, 38) aufeinander zu- oder voneinander wegweisend angeordnet sind.

8. Einrichtung nach Anspruch 3, **dadurch gekennzeichnet, dass** die Haltemittel (14) eine Abwinklung (19) aufweisen und als separates Bauteil an dem Halteteil (13) befestigt sind.

9. Einrichtung nach einem der vorhergehenden Ansprüche, **dadurch gekennzeichnet, dass** die Haltemittel (7, 14, 23, 39) jeweils paarweise an dem Halteteil (2, 13, 22, 31) angeordnet sind und der Abstand der Haltemittel (7, 14, 23, 39) zueinander verstellbar ist.

10. Einrichtung nach einem der vorhergehenden Ansprüche, **dadurch gekennzeichnet, dass** das Halteteil (31) eine quer zur Fahrtrichtung des Kraftfahrzeuges montierbare Führungsschiene (42) zur verschiebbaren Halterung zumindest eines Halteelements (32 - 34) aufweist.

11. Einrichtung nach einem der vorhergehenden Ansprüche 3-8, **dadurch gekennzeichnet, dass** die Haltemittel (55) einen Splint (54) zu ihrer Sicherung an der Haltestange (4) haben.

12. Einrichtung nach einem der vorhergehenden Ansprüche 10-11, **dadurch gekennzeichnet, dass** die Haltemittel (56) eine Schenkelfeder (57) mit einem in Rasterungen (6) der Haltestange (4) eindringenden Schenkel (59) haben.

13. Einrichtung nach einem der vorhergehenden Ansprüche, **dadurch gekennzeichnet, dass** das Halteteil (2) einen von einer Stellschraube (12, 45, 131) verstellbaren, zur Vorspannung gegen die Rückseite der Sitzlehne (1) vorgesehenen Teller (46) aufweist.

14. Einrichtung nach einem der vorhergehenden Ansprüche, **dadurch gekennzeichnet, dass** das Halteteil einen von einem Spannhebel (51) verstellbaren Exzenter (50) zu seiner Vorspannung gegen die Rückseite der Sitzlehne (1) hat.

15. Einrichtung nach einem der vorhergehenden Ansprüche, **dadurch gekennzeichnet, dass** das Halteteil (22, 145) zumindest ein mit einer der Verriegelungen (21, 144) der Sitzlehne (1, 104) korrespondierendes Schließteil (25, 148) hat.

16. Einrichtung nach einem der vorhergehenden Ansprüche, **dadurch gekennzeichnet, dass** sich das Halteteil über die gesamte Breite der Sitzlehne erstreckt und an seinen Enden jeweils ein Schließteil hat.

17. Einrichtung nach einem der vorhergehenden Ansprüche 15 oder 16 in Verbindung mit den Merkmalen des Anspruchs 10, **dadurch gekennzeichnet, dass** zumindest eines der Enden der Führungsschiene in einem Seitenteil befestigt ist und dass das Schließteil des Halteteils an dem Seitenteil angeordnet ist.

18. Einrichtung nach einem der vorhergehenden Ansprüche in Verbindung mit den Merkmalen des Anspruchs 10, **dadurch gekennzeichnet, dass** das Halteelement (32 - 34) auf der Führungsschiene feststellbar gestaltet ist.

19. Einrichtung nach einem der vorhergehenden Ansprüche, **dadurch gekennzeichnet, dass** das Halteelement an einem Hintersitzrücken der Sitzlehne abstützend gestaltet ist.

20. Einrichtung nach einem der vorhergehenden Ansprüche 15, 16 oder 17, **dadurch gekennzeichnet, dass** das Schließteil des Halteteils pilzförmig gestaltet ist.

## Claims

1. Device for fastening a bicycle to a seat back of a motor vehicle, with a holding portion to be fastened to the seat back and with a holding element arranged on the holding portion and provided for fastening the bicycle, **characterised in that** the holding portion (2, 13, 22, 31, 145) is designed for fastening to a headrest support of the seat back (1, 104).

2. Device according to claim 1, **characterised in that** the holding portion (22, 145) is designed for fastening to a locking system (116, 117, 144) of the seat back (1, 104) provided for connection to a locking portion (25, 114, 115) of the body of the motor vehicle.

3. Device according to claim 1 or 2, **characterised in that** the holding portion (2, 13, 22, 31, 145) has holding means (7, 14, 23, 39) for fastening to the holding rods (4, 36-38, 142) which connect the headrests (5, 143) to the seat back (1) or in headrest bushes (15, 156) of the seat back (1) which guide the holding rods (4, 36-38), and has means for supporting it on a rear region of the seat back (1).

4. Device according to claim 3, **characterised in that** the holding means (14) have a latch rod (16) which latches in a headrest bush (15) of the seat back (1) for the holding rods (4) of the headrests (5).

5. Device according to either of the preceding claims 3 or 4, **characterised in that** the holding means (7) have a strap (8) with a bore (9) designed according to the dimensions of the holding rods (4) of the headrest (5).

6. Device according to any of the preceding claims 3-5, **characterised in that** the holding means (23, 39, 146) have a fork-shaped claw (24, 40, 41, 147) provided for laterally encompassing the holding rod (4, 36, 38, 142).

7. Device according to claim 6, **characterised in that** two claws (40, 41) for encompassing one holding rod (36, 38) each are arranged pointing towards or away from each other.

8. Device according to claim 3, **characterised in that** the holding means (14) have an angled portion (19) and are fastened as a separate component to the holding portion (13).

9. Device according to any of the preceding claims, **characterised in that** the holding means (7, 14, 23, 39) are arranged in each case in pairs on the holding portion (2, 13, 22, 31) and the distance between the holding means (7, 14, 23, 39) is adjustable.

10. Device according to any of the preceding claims, **characterised in that** the holding portion (31) has a guide rail (42) which can be mounted transversely to the direction of travel of the motor vehicle, for slidable support of at least one holding element (32-34).

11. Device according to any of the preceding claims 3-9, **characterised in that** the holding means (55) have a cotter pin (54) for securing them to the holding rod (4).

12. Device according to any of the preceding claims 10-11, **characterised in that** the holding means (56) have a leg spring (57) with a leg (59) which enters latch means (6) of the holding rod (4).

13. Device according to any of the preceding claims, **characterised in that** the holding portion (2) has a plate (46) adjustable by a set screw (12, 45, 131) and provided for biasing towards the rear side of the seat back (1).

14. Device according to any of the preceding claims, **characterised in that** the holding portion has a cam (50) adjustable by a tensioning lever (51) for biasing it towards the rear side of the seat back (1).

15. Device according to any of the preceding claims, **characterised in that** the holding portion (22, 145) has at least one locking portion (25, 148) corresponding to one of the locking systems (21, 144) of the seat back (1, 104).

16. Device according to any of the preceding claims, **characterised in that** the holding portion extends across the whole width of the seat back and has a locking portion at each of its ends.

17. Device according to either of the preceding claims 15 or 16 in conjunction with the characteristics of claim 10, **characterised in that** at least one of the ends of the guide rail is fixed in a side portion and **in that** the locking portion of the holding portion is arranged on the side portion.

18. Device according to any of the preceding claims in conjunction with the characteristics of claim 10, **characterised in that** the holding element (32-34) is designed so that it can be locked on the guide rail.

19. Device according to any of the preceding claims, **characterised in that** the holding element is designed for support on a rear seat back panel of the seat back.

20. Device according to any of the preceding claims 15, 16 or 17, **characterised in that** the locking portion of the holding portion is mushroom-shaped.

## Revendications

1. Dispositif permettant de fixer une bicyclette à un dossier de siège d'un véhicule automobile, comprenant une pièce de maintien à fixer au dossier de siège et un élément de maintien disposé sur la pièce de maintien et prévu pour fixer la bicyclette, **caractérisé en ce que** la pièce de maintien (2, 13, 22,31, 145) est réalisée pour être fixée à une attache de repose-tête du dossier de siège (1, 104).

2. Dispositif selon la revendication 1, **caractérisé en ce que** la pièce de maintien (22, 145) est réalisée pour être fixée à un verrouillage (116, 117, 144) du dossier de siège (1, 104), le verrouillage étant prévu pour une connexion avec une pièce de fermeture (25, 114, 115) de la carrosserie du véhicule automobile.

3. Dispositif selon la revendication 1 ou 2, **caractérisé en ce que** pour la fixation aux barres de maintien (4, 36 à 38, 142) reliant les repose-tête (5, 143) au dossier de siège (1) ou dans les douilles de repose-tête (15, 156) du dossier de siège (1) guidant les barres de maintien (4, 36 à 38), la pièce de maintien (2, 13, 22, 31, 145) présente des moyens de maintien (7, 14, 23, 39) et des moyens pour prendre appui dans une zone arrière du dossier de siège (1).

4. Dispositif selon la revendication 3, **caractérisé en ce que** les moyens de maintien (14) comportent une barre d'arrêt (16) s'enclenchant dans une douille de repose-tête (15) du dossier de siège (1) pour les barres de maintien (4) des repose-tête (5).

5. Dispositif selon l'une quelconque des revendications précédentes 3 ou 4, **caractérisé en ce que** les moyens de maintien (7) présentent un collier (8) avec un alésage (9) réalisé selon les dimensions des barres de maintien (4) du repose-tête (5).

6. Dispositif selon l'une quelconque des revendications précédentes 3 à 5, **caractérisé en ce que** les moyens de maintien (23, 39, 146) comportent une griffe en forme de fourche (24, 40, 41, 147) prévue pour entourer latéralement la barre de maintien (4, 36, 38, 142).

7. Dispositif selon la revendication 6, **caractérisé en ce que** deux griffes (40, 41) pour entourer respectivement une barre de maintien (36, 38) sont disposées en étant tournées l'une vers l'autre ou détournée l'une de l'autre.

8. Dispositif selon la revendication 3, **caractérisé en ce que** les moyens de maintien (14) présentent un coude (19) et sont fixés à la pièce de maintien (13) comme un élément de construction séparé.

9. Dispositif selon l'une quelconque des revendications précédentes, **caractérisé en ce que** les moyens de maintien (7, 14, 23, 39) sont disposés respectivement par paires sur la pièce de maintien (2, 13, 22, 31) et l'espacement des moyens de maintien (7, 14, 23, 39) est réglable mutuellement.

10. Dispositif selon l'une quelconque des revendications précédentes, **caractérisé en ce que** la pièce de maintien (31) présente un rail de guidage (42) à monter transversalement au sens de la marche du véhicule automobile pour une attache mobile d'au moins un élément de maintien (32 à 34).

11. Dispositif selon l'une quelconque des revendications précédentes 3 à 9, **caractérisé en ce que** les moyens de maintien (55) comportent une goupille (54) pour être ancrés sur la barre de maintien (4).

12. Dispositif selon l'une quelconque des revendications précédentes 10 à 11, **caractérisé en ce que** les moyens de maintien (56) comportent un ressort à branches (57) avec une branche (59) pénétrant dans des encoches d'arrêt (6) de la barre de maintien (4).

13. Dispositif selon l'une quelconque des revendications précédentes, **caractérisé en ce que** la pièce de maintien (2) présente un disque (46) réglable par une vis de réglage (12, 45, 131) pour la précontrainte contre le dos du dossier de siège (1).

14. Dispositif selon l'une quelconque des revendications précédentes, **caractérisé en ce que** la pièce de maintien comporte un excentrique (50) réglable par un levier de serrage (51) pour la précontraindre contre le dos du dossier de siège (1).

15. Dispositif selon l'une quelconque des revendications précédentes, **caractérisé en ce que** la pièce de maintien (22, 145) comporte au moins une pièce de fermeture (25, 148) correspondant à l'un des verrouillages (21, 144) du dossier de siège (1, 104).

16. Dispositif selon l'une quelconque des revendications précédentes, **caractérisé en ce que** la pièce de maintien s'étend sur toute la largeur du dossier de siège et comporte à ses extrémités respectivement une pièce de fermeture.

17. Dispositif selon l'une quelconque des revendications précédentes 15 ou 16 en conjonction avec les caractéristiques de la revendication 10, **caractérisé en ce qu'**au moins l'une des extrémités du rail de guidage est fixée dans une pièce latérale et **en ce que** la pièce de fermeture de la pièce de maintien est disposée sur la pièce latérale.

18. Dispositif selon l'une quelconque des revendications précédentes en conjonction avec les caractéristiques de la revendication 10, **caractérisé en ce que** l'élément de maintien (32 à 34) est réalisé de façon verrouillable sur le rail de guidage.

19. Dispositif selon l'une quelconque des revendications précédentes, **caractérisé en ce que** l'élément de maintien est réalisé de façon à prendre appui sur un dos de siège arrière du dossier de siège.

20. Dispositif selon l'une quelconque des revendications précédentes 15, 16 ou 17, **caractérisé en ce que** la pièce de fermeture de la pièce de maintien est réalisée en forme de champignon.
